# NEUE EUROPÄISCHE PATENTSCHRIFT

(11) **EP 0 282 753 B2**
(45) Veröffentlichungstag und Bekanntmachung des Hinweises auf die Entscheidung über den Einspruch: **28.06.1995**
(45) Hinweis auf die Patenterteilung: 20.05.1992
(21) Anmeldenummer: 88102405.3
(22) Anmeldetag: 19.02.1988
(51) Int. Cl.: B01D 3/00, B01D 53/18

(54) **Vorrichtung zur gleichmässigen Verteilung einer Flüssigkeit auf Austauschabschnitte einer Stoff- und Wärmeaustauschkolonne**
Apparatus for the uniform distribution of a liquid on a transfer section of a mass and heat transfer column
Dispositif pour la distribution uniforme d'un liquide sur des parties d'échanges d'une colonne d'échange de matière et de chaleur

(30) Priorität: 02.03.1987 CH 782/87
(43) Veröffentlichungstag der Anmeldung: 21.09.1988
(73) Patentinhaber: GEBRÜDER SULZER AKTIENGESELLSCHAFT, CH-8401 Winterthur (CH)
(72) Erfinder: Michels, Christoph, D-8700 Würzburg Lengfeld (DE)

(56) Entgegenhaltungen:
- DE-A- 3 013 783
- DE-C- 275 391
- FR-A- 979 677
- GB-A- 1 179 293
- Zeichnung Nr. 6-1-21180 von Julius Montz GmbH

## Beschreibung

Die Erfindung betrifft eine Vorrichtung zur gleichmässigen Verteilung einer Flüsigkeit auf Austauschabschnitte einer Stoff- und Wärmeaustauschkolonne gemäss Oberbegriff von Anspruch 1.

Flüssigkeitsverteiler bezwecken eine gleichmässige Verteilung der Flüssigkeit über den Querschnitt derartiger Kolonnen.

Gebräuchliche Typen solcher Kolonnen, auf welche die Erfindung vorteilhaft Anwendung finden kann, sind insbesondere Kolonnen, bei denen die Austauschabschnitte aus geordneten Packungen, z.B. aus geriffelten, lamellenartigen Elementen, bestehen. Jedoch kann die Erfindung auch bei solchen Kolonnen verwendet werden, in denen die Austauschabschnitte aus regellosen Schüttungen von Füllkörpern, beispielsweise Raschigringen oder aus jeweils einem Bündel von vertikalen, parallel angeordneten Kanälen bestehen, wobei entweder bei grösserem Durchmesser der einzelnen Kanäle diese mit Füllkörpern ausgefüllt sind oder bei kleinem Durchmesser der Kanäle die Kolonne als sogenannte Filmkolonne ausgebildet ist.

In derartigen Kolonnen kann z.B. eine Destillation, Rektifikation, Extraktion, Absorption, auch eine Abtrennung isotoper Elemente aus einem Stoff aufgrund einer chemischen Austauschreaktion wie auch ein Wärmeaustausch zwischen einer Flüssigkeit und einem dampf- bzw. gasförmigen Medium durchgeführt werden.

Von der grossen Anzahl von Flüssigkeitsverteilern werden nachstehend einige bekannte und häufig angewendete Typen erwähnt.

So besteht beispielsweise eine bekannte Ausführungsform darin, Flüssigkeitsverteiler als Loch-oder Siebböden mit einer grossen Anzahl von gleichmässig angeordneten Lochungen oder Lochtüllen mit Ueberlaufsystemen auszubilden.

Diese Ausführungsform hat den Nachteil einer grossen Abdeckung des Kolonnnenquerschnittes, um eine einigermassen gleichmässige Flüssigkeitsverteilung über den gesamten Kolonnenquerschnitt zur erreichen. Trotz den Dampfkaminen und dem möglichen Spalt zwischen Verteiler und Kolonnenwand ist der freie Querschnitt für den Dampfdurchtritt sehr eingeengt, was zu einem hohen Druckabfall führt. Es ist auch schon vorgeschlagen worden, seitliche Röhrchen anzubringen. Diese Massnahme erhöht zwar die Gleichmässigkeit der Flüssigkeitsverteilung, vermag jedoch den gasseitig grossen Druckabfall nur geringfügig zu verringern.

Eine weitere bekannte Ausführungsform besteht darin, Flüssigkeitsverteiler als sogeannte Kasten-oder Rohrverteiler mit Lochungen an der Unterseite für den Flüssigkeitsablauf auszubilden.

Diese Verteilungssysteme weisen jedoch den wesentlichen Nachteil auf, dass die Flüssigkeit nur unterhalb der Kästen bzw. der Rohre abströmen kann. Dieses hat zur Folge, dass eine grosse Anzahl von Kästen bzw. Rohren für eine feine Verteilung der Flüssigkeit erforderlich ist, was einerseits einen hohen gasseitigen Druckabfall bewirkt und andererseits konstruktiv aufwendig ist.

Bekanntlich hängt die Wirkung, in den erstgenannten Fällen die Trennwirkung und im letztgenannten Fall die Wärmeübertragung wesentlich von einer gleichmässigen und feinen Verteilung der Flüssigkeit auf die Oberfläche eines Austauschabschnittes ab.

Aus der DE-PS 27 52 391 ist eine Verteilvorrichtung bekannt, die aus parallel zueinander angeordneten U-förmigen oben offenen Rinnen bestehen soll, die am oberen Rand der hochstehenden Schenke V-schlitzförmige Flüssigkeitsaustrittsöffnungen besitzen. Vor den Flüssigkeitsaustriffsöffnungen sollen sich in einem geringen Abstand zu diesen durchgehende Leitwände befinden.

Die Spalte zwischen Schenkeln und Leitwänden sind so bemessen, dass die austretende Flüssigkeitsmenge ihn ausfüllt. Die Flüssigkeit wird im Spalt quasi "gequetscht", so dass ein breiter Flüssigkeitsstrom entsteht. Die Leitwände sollen die Schenkel der Rinnen überragen und ebenfalls mit Ueberlaufschlitzen versehen sein, so dass bei hohen Belastungen die sich im Spalt aufstauende Flüssigkeit über diese Schlitze abströmen kann. Um auch bei kleinen Flüssigkeitsmengen ein Abströmen der Flüssigkeit in der gewünschten Art zu erreichen, sollen in den Spalten Drahtnetze oder Streckgitter angeordnet sein, so dass infolge der auftretenden Kapillarkräfte in Verbindung mit dem Staudruck an den Austrittsöffnungen unmittelbar hinter diesen eine Querverteilung der Flüssigkeit stattfindet.

Der bekannte Verteiler weist eine Reihe von wesentlichen Nachteilen auf.

Der Abstand der Leitwände von den Schenkeln der Rinnen muss entsprechend der Flüssigkeitsbelastung genau eingeregelt werden, wobei bei Veränderungen der Betriebsbedingungen ein Betriebsunterbruch erforderlich ist.

Da die Spaltweite um Grössenordnungen kleiner als die Austrittsöffnungen ist, und die Spalte ausserdem sogar noch Drahtgewebe oder Streckgitter enthalten können, ist die Verschmutzungs-und damit die Verstopfungsgefahr gross. Im weiteren sind die bekannten Vorrichtungen im wesentlichen Ueberlaufsysteme, wodurch sie auf Schiefstellungen sehr empfindlich sind.

Die in die Spalte austretende Flüssigkeit weist ausserdem eine relativ geringe Austrittsgeschwindigkeit auf, da die Stauhöhe in den Ueberlaufschlitzen der Schenkel der rinnen relativ gering ist, und die Austrittsgeschwindigkeit von dieser Stauhöhe abhängt.

Die Erfindung hat sich eine Vorrichtung zur gleichmässigen Verteilung einer Flüssigkeit in Austauschkolonnen zum Ziel gesetzt, die eine hohe Verteilungsgüte aufweist und die weitgehend unabhängig von der Flüssigkeitsbelastung und konstruktiv einfach ist.

Diese Aufgabe wird mit Hilfe der im Kennzeichen des Anspruchs 1 angegebenen Merkmale erreicht.

Vorteilhafte Weiterbildungen der Erfindung sind in den Ansprüchen 2 bis 6 beschrieben.

Bei der Erfindung wird die kinetische Energie eines Flüssigkeitsstrahls zur Ausbreitung der Flüssigkeit ausgenutzt.

Mit Hilfe der Erfindung wird deshalb eine gute Funktionsweise erreicht, weil die Ausbreitung der Flüssigkeit auf der Prallwand auch in einem sehr grossen Bereich von z.B. 50 bis 200 mm Zulaufhöhe sich überraschenderweise nur unwesentlich ändert, wie aus den nachstehenden Messdaten hervorgeht.
Austrittslochdurchmesser = 6 mm
Prallwandabstand = 12 mm
Prallwandhöhe = Fallhöhe der Flüssigkeit von Loch auf Packungsoberfläche = 120 mm
Flüssigkeitsfilmbreite = Flüssigkeitsstreifenlänge = b (mm)
Stauhöhe im Armkanal = h (mm)
Testmedium = 98 %iges Aethanol

| h (mm) | b (mm) |
|---|---|
| 50 | 132 |
| 80 | 152 |
| 120 | 160 |
| 160 | 166 |
| 200 | 180 |

Aus den vorstehenden Messdaten geht hervor, dass bei einer Reduktion der Zulaufhöhe um den Faktor 4, die Ausbreitungsfläche sich nur um 27 % verringert.

Mit einer erfindungsgemäss ausgebildeten Vorrichtung kann eine gleiche Feinheit der Flüssigkeitsverteilung mit einer um Grössenordnungen geringeren Anzahl von Flüssigkeitsaustrittsöffnungen gegenüber üblichen Flüssigkeitsverteilern, beispielsweise Kasten- oder Rohrverteilern erzielt werden. Die Flüssigkeitsaustrirtsöffnungen können entsprechend grösser dimensioniert werden, so dass eine erfindungsgemäss ausgeführte Vorrichtung bedeutend weniger verschmutzungsempfindlich ist.

Wird der Verteiler zusammen mit einer geordneten Packung verwendet, so richtet man vorteilhaft den Verteiler derart, dass die Verteilarme senkrecht zur Hauptausbreitungsrichtung der unter dem Verteiler liegenden Lagen der Packung angeordnet sind.

Die Anzahl der Verteilarme bzw. -kanäle, die rohr- oder rinnenförmig ausgebildet sein können, können im Vergleich zu üblichen Flüssigkeitsverteilern wesentlich reduziert werden. Hierdurch wird der freie Gasdurchtrittsquerschnitt vergrössert, so dass die Druckverluste in der Gasphase reduziert werden.

Weiterhin können erfindungsgemässe Vorrichtungen entsprechend den jeweiligen Anwendungen auf einfache Art aus Normteilen hergestellt werden.

Die Kennzeichen der Ansprüche 3 bis 6 betreffen vorteilhafte Weiterbildungen der Erfindung, insbesondere bei hohen Gasgeschwindigkeiten, um ein Mitreissen der Flüssigkeit durch Gas zu verhindern.

Die Erfindung wird im folgenden anhand von in den Zeichnungen schematisch dargestellten Ausführungsbeispielen erläutert.

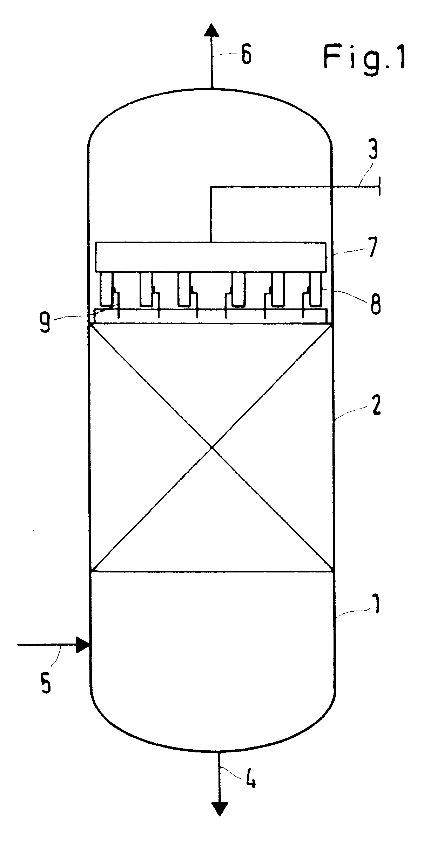

Fig. 1 zeigt eine Austauschkolonne mit einer erfindungsgemäss ausgebildeten Verteilvorrichtung im Längsschnitt.
Die Fig. 2a bis 2c zeigen eine Ausführungsform der Erfindung in perspektivischer Darstellung und in einer Seiten- und Vorderansicht,
die Fig. 3a bis 3c bis 5a bis 5c variante Ausführungsformen und
die Fig. 6 und 7 spezielle Ausführungsformen von Prallwänden.

In einer Austauschkolonne, z.B. einer Rektifikationskolonne 1, sind im Stoffaustauschteil Packungen 2 mit geordneter Struktur, wie sie z.B. aus der CH-PS 398 503 bekannt sind, angeordnet. An die Kolonne sind Flüssigkeitszu- und -ableitungen, bzw. Gaszu- und -ableitungen 3 bis 6 angeschlossen.

Durch die Einspeiseleitung 3 wird Flüssigkeit in einen Verteile< eingespeist, der einen nach oben offenen Hauptkanal 7 aufweist. Von diesem Hauptkanal aus werden darunter angeordnete, nach oben offene Nebenkanäle 8 gespeist, wobei diese mit erfindungsgemässen und anhand der nachfolgenden Zeichnungen näher erläuterten Prallwänden 9 ausgestattet sind.

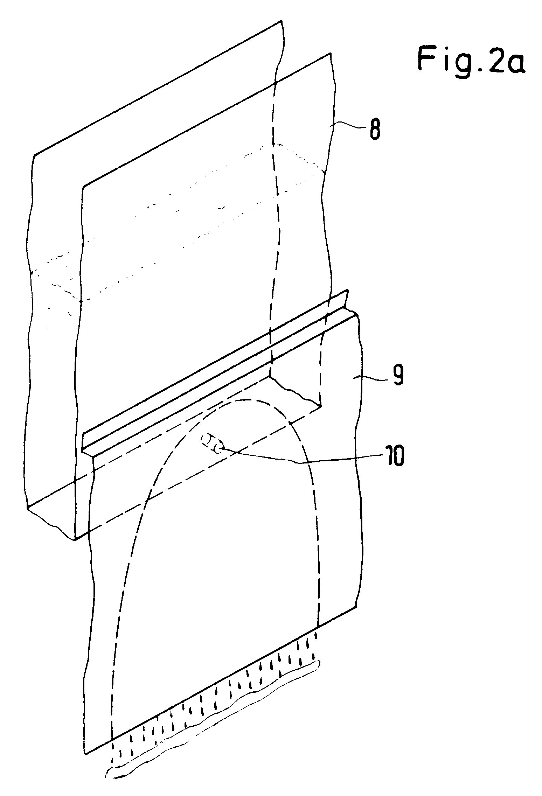

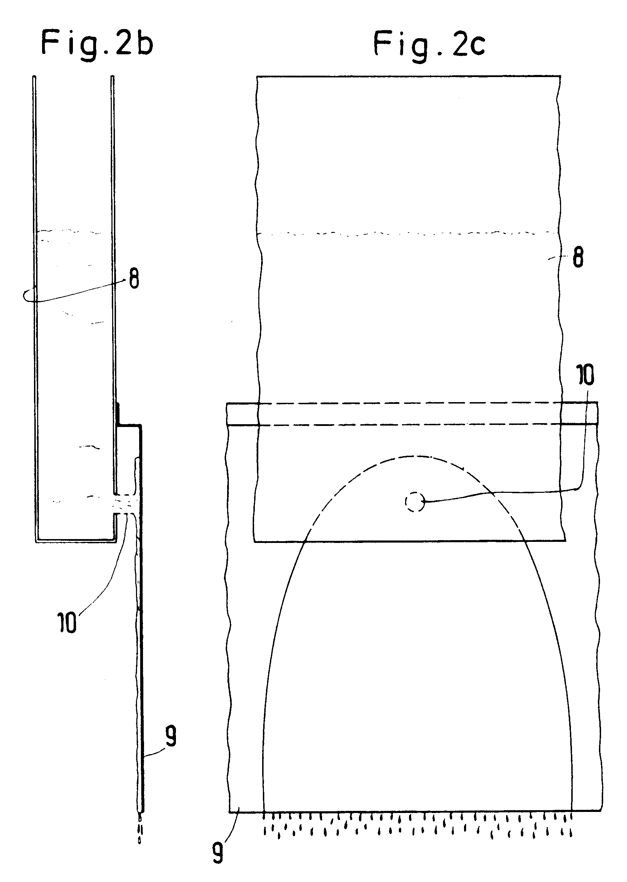

Wie aus den Fig. 2a bis 2c hervorgeht, ist ein Nebenkanal 8, der im Ausführungsbeispiel als U-förmige Rinne ausgebildet ist, der aber auch aus einem Rohr bestehen könnte, mit einer Prallwand 9 versehen. Diese Prallwand ist nach oben abgebogen und fest mit einem Schenkel des Nebenkanals verbunden. Dieses hat den Vorteil, dass keine Flüssigkeit von aufsteigendem Gas nach oben mitgerissen werden kann.

Grundsätzlich können auch die gegenüberliegenden Seiten des Spaltes durch Wände abgeschlossen sein, um ein Mitreissen von Flüssigkeit nach oben zu verhindern. Im unteren Teil des Schenkels des Nebenkanals ist eine Austrittsöffnung 10 für die Flüssigkeit vorgesehen.

Durch die Oeffnung 10 tritt die Flüssigkeit mit einer relativ hohen Geschwindigkeit aus, prallt auf der Wand 9 auf und verteilt sich auf ihr parabelartig. Zur Verteilung wird hierbei die kinetische Energie der austretenden Flüssigkeit ausgenutzt.

Selbstverständlich können auch an beiden Seiten eines Nebenkanals Prallwände angeordnet sein.

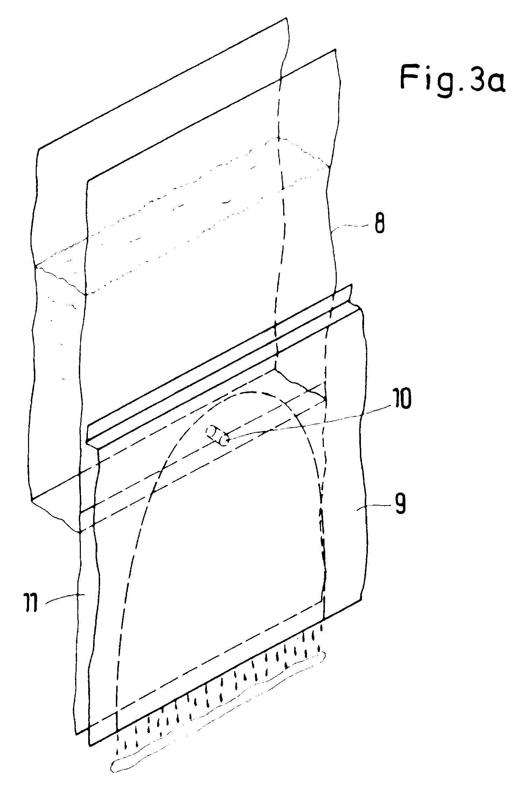

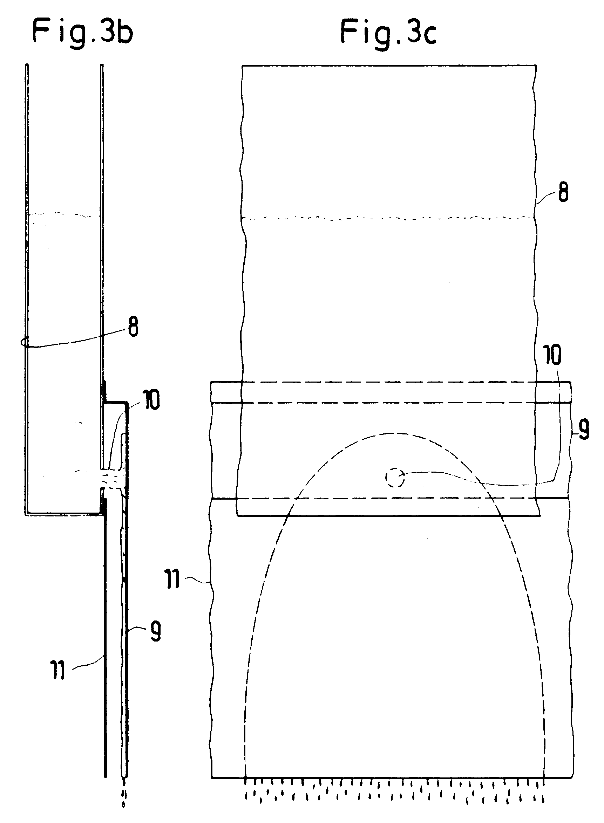

Die Fig. 3a bis 3c stimmen mit den Fig. 2a bis 2c darauf überein, dass zusätzlich an den unteren Teil der Kanalwand eine Schirmwand 11 angeordnet ist. Aufgrund dieser Massnahme wird insbesondere bei hohen Gasgeschwindigkeiten noch besser verhindert, dass Flüssigkeit vom Gas mitgerissen werden kann.

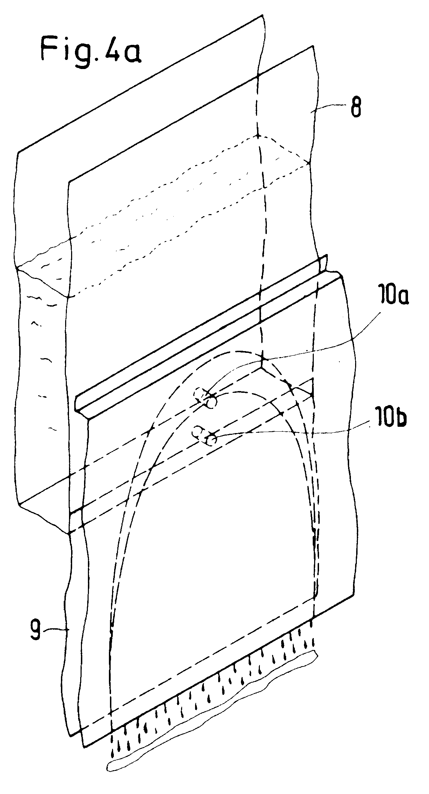

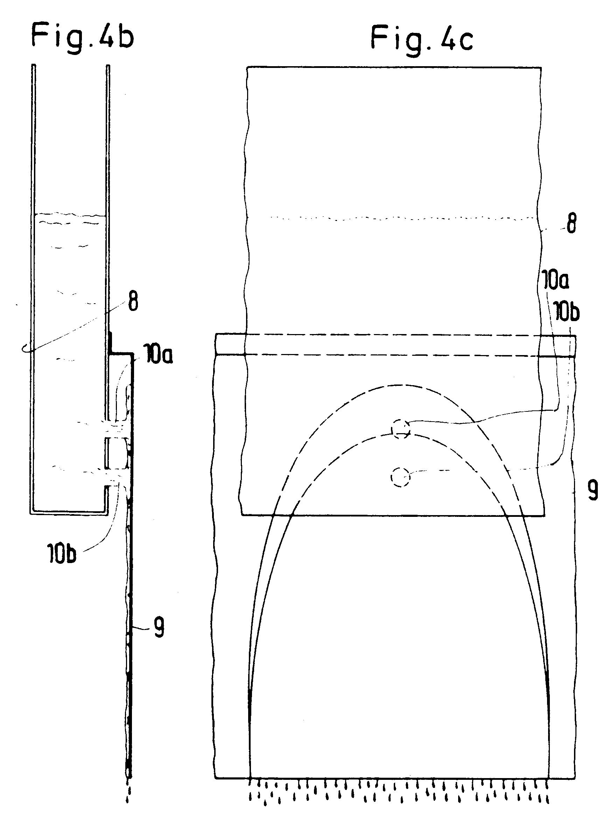

Das in den Fig. 4a bis 4c dargestellte Ausführungsbeispiel stimmt mit den Fig. 2a bis 2c bis darauf überein, dass zwei übereinander angeordnete Austrittsöffnungen 10a und 10b vorgesehen sind. Hierdurch kann die Vorrichtung einen breiten Bereich von Belastungszuständen überstreichen.

Bei zweistufigen Verteilern kann es vorteilhaft sein, dass die Flüssigkeit von der oberen und unteren Reihe von Austrittsöffnungen jeweils auf separate, nebeneinander angeordnete Prallwände auftrifft und sich dort ausbreitet.

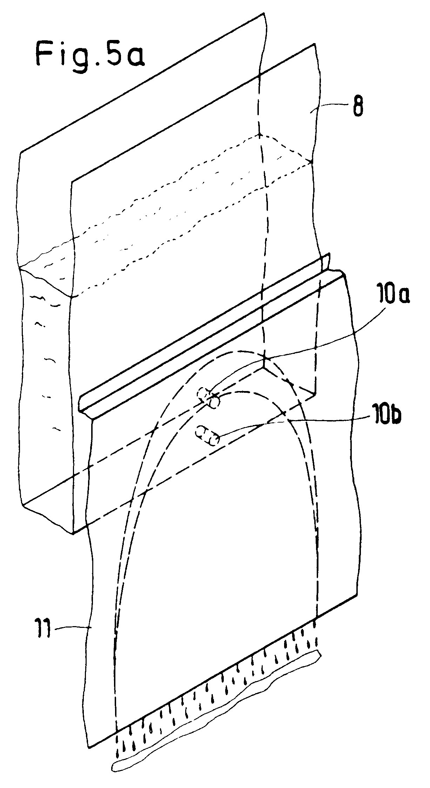

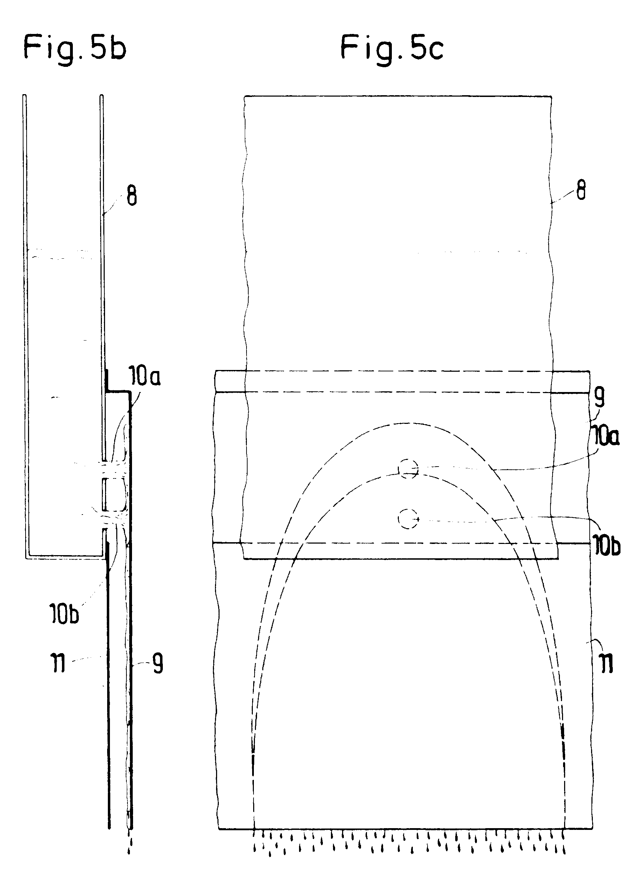

Das gleiche gilt für die in den Fig. 5a bis 5c dargestellte Ausführungsform, wobei in Uebereinstimmung mit den Fig. 3a bis 3c an der Kanalwand 8 jeweils eine Schirmwand 11 angebracht ist.

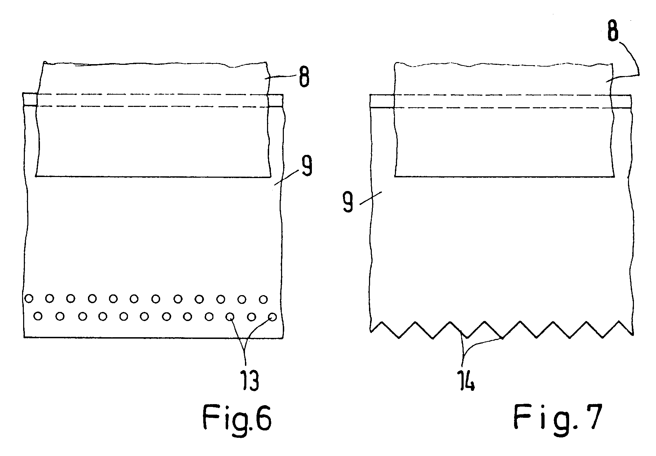

In den Fig. 6 und 7 sind verschiedene Ausführungsformen für Prallwände dargestellt, wobei die Prallwand gemäss Fig. 6 im unteren Bereich eine Lochung 13 aufweist zu einer noch besseren Verteilung der Flüssigkeit.

Eine Prallwand 9 gemäss Fig. 7 ist an ihrem unteren Ende mit Zacken 14 versehen, um ein besseres Abtropfen der Flüssigkeit herbeizuführen.

## Patentansprüche

1. Vorrichtung zur gleichmässigen Verteilung einer Flüssigkeit auf Austauschabschnitte einer Stoff- und Wärmeaustauschkolonne bestehend aus mindestens einem Verteilkanal (8), welche die Flüssigkeit von einer Aufgabeeinrichtung durch eine Anzahl von in den Seitenwänden des Verteilkanals angebrachten Austrittsöffnungen (10) auf eine von einem Austauschabschnitt gebildete, obere Querschnittsfläche verteilt, wobei in einem Abstand von mindestens einer Seitenwand pro Verteilkanal (8) eine Leitwand (9) angeordnet ist, dadurch gekennzeichnet, dass die Austrittsöffnungen (10) im unteren Bereich der seitlichen Kanalwände (8) angebracht sind und die durch sie unter hohem Impuls austretende Flüssigkeit auf die als Prallwände ausgebildeten Leitwände strahlförmig auftrifft, wobei die Prallwände (9) im wesentlichen eben ausgebildet sind, wodurch die zu verteilende Flüssigkeit jeweils in einer Ebene bleibend vom unteren Ende der Prallwände abtropft, und der Abstand der Prallwände (9) zu den seitlichen Kanalwänden (8) grösser als die sich bildende Filmdicke ist.

2. Vorrichtung nach Anspruch 1, dadurch gekennzeichnet dass der Abstand der Prallwand (9) zur Seitenwand des Verteilkanals (8) grösser ist als der Durchmesser von gleichgroßen Austrittsöffnungen (10).

3. Vorrichtung nach Anspruch 1, dadurch gekennzeichnet, dass die Prallwand (9) oben abgewinkelt ist und mit der Seitenwand des Verteilkanals (8) verbunden ist.

4. Vorrichtung nach Anspruch 1, dadurch gekennzeichnet, dass mit der unteren Kante der Seitenwand des Verteilkanals (8) eine sich parallel zur Prallwand erstreckende und bis zur Unterkante der Prallwand reichende Schirmwand (11) verbunden ist.

5. Vorrichtung nach Anspruch 1, dadurch gekennzeichnet, dass im unteren Bereich der Prallwand (9) mindestens eine Reihe von Löchern (13) angeordnet ist.

6. Vorrichtung nach Anspruch 5, dadurch gekennzeichnet, dass die gegenüberliegenden Seitenflächen zwischen Schirm-und Prallwand durch durchgehende Wände miteinander verbunden sind.

## Claims

1. A device for uniformly distributing a liquid over exchange sections of a mass transfer and heat exchange column comprising at least one distributing duct (8), the column distributing the liquid from a feed device through a number of exit orifices (10̸) in the side walls of the distributing duct (8) over a top cross-sectional surface embodied by an exchange section, a deflecting wall (9) being disposed at a distance of at least one side wall per distributing duct (8), characterised in that the exit orifices (10̸) are disposed in the bottom zone of the lateral duct walls (8) and the liquid issuing through the orifices (10̸) with a high impulse impinges as a stream on the deflecting walls (9), the same being devised as baffles, the baffles (9) being of substantially flat construction, so that the liquid for distribution drips away from the bottom end of the baffles while remaining in one plane in each case, the distance between the baffles (9) and the lateral duct walls (8) being greater than the film thickness which forms.

2. A device according to claim 1, characterised in that the distance between the baffle (9) and the side wall of the distributing duct (8) is greater than the diameter of equally large exit orifices (10̸).

3. An apparatus according to claim 1, characterised in that the baffle (9) is bent at the top and is connected to the side wall of the distributing duct (8).

4. An apparatus according to claim 1, characterised in that a screening wall (11) which extends parallel to the baffle and as far as the bottom edge thereof is connected to the bottom edge of the side wall of the duct (8).

5. An apparatus according to claim 1, characterised in that at least one row of apertures (13) is disposed in the bottom zone of the baffle (9).

6. An apparatus according to claim 5, characterised in that the facing side surfaces of the screening wall and the baffle are interconnected by continuous walls.

## Revendications

1. Dispositif de répartition uniforme d'un liquide sur des tronçons d'échange d'une colonne d'échange de matière et de chaleur, qui se compose d'au moins un canal de répartition (8) qui répartit le liquide provenant d'un dispositif de déchargement au moyen de multiples trous de sortie (10) réalisés dans les parois latérales du canal de répartition sur une surface supérieure d'une section formée d'un tronçon d'échange, un déflecteur (9) étant disposé à une certaine distance d'au moins une paroi latérale de chaque canal de répartition (8), caractérisé en ce que les trous de sortie (10) sont placés à la partie inférieure des parois latérales (8) du canal et le liquide sortant par eux sous forte impulsion rencontre sous forme de jets les déflecteurs conformés en parois d'impact, les parois d'impact (9) ayant une configuration sensiblement plane permettant au liquide devant être réparti de s'égoutter de l'extrémité inférieure des parois d'impact en demeurant dans un plan, et la distance des parois d'impact (9) aux parois latérales (8) du canal étant supérieure à l'épaisseur du film qui se forme.

2. Dispositif selon la revendication 1, caractérisé en ce que la distance de la paroi d'impact (9) à la paroi latérale du canal de répartition (8) est supérieure au diamètre des trous de sortie (10) qui ont des dimensions identiques.

3. Dispositif selon la revendication 1, caractérisé en ce que la partie supérieure de la paroi d'impact (9) est coudée et fixée à la paroi latérale du canal de répartition (8).

4. Dispositif selon la revendication 1, caractérisé en ce qu'une paroi (11) formant écran, qui est parallèle à la paroi d'impact et qui atteint le niveau du bord inférieur de cette dernière, est reliée au bord inférieur dé la paroi latérale du canal de répartition (8).

5. Dispositif selon la revendication 1, caractérisé en ce qu'au moins une rangée de trous (13) est réalisée dans la partie inférieure de la paroi d'impact (9).

6. Dispositif selon la revendication 5, caractérisé en ce que les surfaces latérales opposées, situées entre la paroi formant écran et la paroi d'impact, sont reliées l'une à l'autre par des parois continues.
